# EUROPÄISCHE PATENTSCHRIFT

(11) **EP 2 398 848 B1**
(45) Veröffentlichungstag und Bekanntmachung des Hinweises auf die Patenterteilung: **04.12.2019**
(21) Anmeldenummer: 10702451.5
(22) Anmeldetag: 12.01.2010
(51) Int. Cl.: C08J 7/04, B60S 1/38

(54) **VERFAHREN ZUR HERSTELLUNG EINES STRANGFÖRMIGEN PROFILS**
PROCESS FOR PRODUCING ELASTOMERIC LINEAR PROFILE
PROCÉDÉ POUR PRODUIRE DES PROFILÉS ÉLASTOMÈRES EXTRUDÉS

(30) Priorität: 17.02.2009 DE 102009000912
(43) Veröffentlichungstag der Anmeldung: 28.12.2011
(73) Patentinhaber: Robert Bosch GmbH, 70442 Stuttgart (DE)
(72) Erfinder: VERBURGH, Yves, B-2870 Puurs (BE)
(86) Internationale Anmeldenummer: PCT/EP2010/050249
(87) Internationale Veröffentlichungsnummer: WO 2010/094522

(56) Entgegenhaltungen:
- EP-A2- 0 562 191
- WO-A1-03/080717
- US-A- 6 077 592
- US-A1- 2003 087 767
- US-A1- 2006 046 047
- US-B2- 6 730 360

## Beschreibung

### Stand der Technik

Die Erfindung geht aus von einem Verfahren zur Herstellung eines strangförmigen Profils aus einem Elastomermaterial gemäß dem Oberbegriff des Anspruchs 1.

Strangförmige Profile aus Elastomermaterialien finden zum Beispiel Einsatz als Wischgummis für Wischblätter für Scheibenwischer. Durch die Verwendung von Elastomerprofilen können sich die Wischblätter einerseits an die Kontur einer Windschutzscheibe eines Kraftfahrzeugs anpassen und andererseits wird eine ausreichende Elastizität bei unterschiedlichen Temperaturanforderungen gewährleistet. Derartige Elastomerprofile sind beispielsweise aus Naturkautschuk, Chloropren, Silikon, Kautschuk oder Polyurethangummi hergestellt. Allerdings zeigen diese Elastomermaterialien einen vergleichsweise hohen Reibungskoeffizienten auf einer zu reinigenden Oberfläche, beispielsweise auf Glas, so dass oftmals ein Vielfaches an Presskraft zur Horizontalbewegung des Wischblattes angelegt werden muss.

Um den Reibungskoeffizienten eines Wischblattes auf einer Windschutzscheibe eines Kraftfahrzeuges zu reduzieren, werden zum Beispiel reibungsvermindernde Beschichtungen eingesetzt. Geeignete Beschichtungsmaterialien sind zum Beispiel in US 6,730,360 beschrieben. Das Beschichtungsmaterial enthält ein Polyurethan, ein Siloxan, ein Polyamidpulver, ein Polyethylenpulver oder eine Polyamidlösung. Die vorgeschlagenen Schmierstoffe liegen partikulär vor, was bedeutet, dass diese als ein harter physikalischer Abstandshalter aus der Beschichtungsoberfläche hervorragen, was jedoch den Nachteil mit sich bringt, dass die Wischqualität verringert wird. Insbesondere können sich Schleier und Streifen während des Wischens bilden. Zudem können diese Arten an partikelförmigen Füllstoffen leicht aus der Oberfläche der Beschichtung herausgelöst werden aufgrund der Adhäsion und Kohäsionsfestigkeit der Struktur der Beschichtung.

Auch wird die Beschichtung durch ein Tauchverfahren aufgebracht, wobei es sich um ein sehr unpräzises Beschichtungsverfahren handelt, das weder eine klare Begrenzung des beschichteten Bereichs noch eine präzise Dicke der Beschichtung ermöglicht.

Hydrophobe Beschichtungen für Wischblätter sind beispielsweise in US 6,696,391 beschrieben. Diese enthalten ein Bindemittel, das einen Elastizitätsmodul von 1 MPa oder mehr aufweist, um den gewünschten niedrigen Reibungskoeffizienten zu erhalten. Hierbei wird jedoch nicht die Kohäsionsfestigkeit der Zusammensetzung aus Bindemittel und Graphit und damit die Verschleißfestigkeit berücksichtigt. Zudem erfolgt das Aufbringen der Beschichtung durch ein Sprühverfahren, bei dem es sich ebenfalls um ein sehr ungenaues Verfahren handelt, bei dem sich aufgrund der Form des Sprühkegels und durch entstehendes Overspray eine genaue Begrenzung des zu beschichtenden Bereiches nicht realisieren lässt. Auch kann die Filmdicke nicht genau eingestellt werden. Diese liegt im Allgemeinen im Bereich zwischen 2 bis 10 µm.

Große Filmdicken von mehr als 4 µm führen jedoch zu Mängeln in der Wischqualität. Aus diesem Grund ist es wichtig, die Filmdicke der Beschichtung kleiner als 4 µm zu halten. Zudem sollte die Filmdicke im Wesentlichen konstant sein.

Ein Wischblatt, welches sowohl auf gewöhnlichem Glas als auch auf wasserabweisendem Glas eine lange Zeit ohne zu rattern betrieben werden kann, ist in JP 2003 183 531 beschrieben. Hierzu weist das Wischerblatt eine aufgeraute Oberfläche auf, wobei genaue vertiefte und hervorstehende Bereiche auf der Oberfläche vorgesehen sind. Das Aufrauen der Oberfläche wird während der Vulkanisation erzeugt, indem entsprechend geformte Werkzeuge eingesetzt werden. Nachteil der aufgerauten Oberfläche ist jedoch, dass diese nicht auf extrudierte Wischerprofile aufgebracht werden können. Zudem kann die Form durch Verschleiß während der Herstellung der Wischerblätter geglättet werden. Die Qualität nimmt somit mit zunehmender Anzahl an hergestellten Wischblättern ab.

Weiterhin ist aus der WO 03/080717 A1 ein Verfahren zur Herstellung eines Gummiartikels mit einer reibungsmindernden Beschichtung bekannt, die aus einem Gleitlack gebildet ist. Bei der Herstellung wird eine Grundform des Gummiartikels mit einem fotochemisch härtenden Gleitlack beschichtet und dieser dann ausgehärtet. Der Gleitlack kann mittels eines Inkjets auf die Grundform des Gummiartikels aufgebracht werden.

### Offenbarung der Erfindung

Beim erfindungsgemäß Verfahren zur Herstellung eines strangförmigen Profils aus einem Elastomermaterial, das zumindest teilweise mit einer reibungsvermindernden Beschichtung versehen ist, wird für die reibungsvermindernde Beschichtung eine aushärtbare Tinte mit reibungsverminderndem Zusatz durch ein Tintenstrahl-Druckverfahren auf das Elastomermaterial aufgetragen.

Durch den Einsatz eines Tintenstrahl-Druckverfahrens lässt sich der zu beschichtende Bereich sehr genau abgrenzen. Zum Beispiel ist es hierdurch möglich, einen schmalen Streifen auf das Elastomerprofil aufzubringen. Auch kann durch das Tintenstrahldruckverfahren die Dicke der Beschichtung sehr genau eingestellt werden.

Ein weiterer Vorteil des Einsatzes von Tintenstrahl-Druckverfahren ist, dass damit auch beliebige Muster auf das strangförmige Profil gedruckt werden können. So hat es sich zum Beispiel nicht als notwendig erwiesen, eine kontinuierliche Beschichtung vorzusehen, um eine geringe Ratter-Amplitude in Verbindung mit guten Wischqualitäten zu erhalten. So ist es zum Beispiel ausreichend, die Beschichtung in Form vorgegebener Muster aufzubringen. Hierbei kann es sich zum Beispiel um sich wiederholende Muster von beschichteten und nicht beschichteten Bereichen handeln. Vorteil solcher gemusterten Oberfläche ist, dass hierdurch die Menge an Beschichtungsmaterial auf der Oberfläche reduziert werden kann und trotzdem eine ausreichende Schmierwirkung erzielt wird. Es ist somit möglich, eine spezifische beschichtete Oberfläche zu gestalten, mit der der Reibungskoeffizient ausreichend herabgesetzt werden kann und trotzdem eine hervorragende Wischqualität beibehalten wird.

Das Elastomermaterial, aus dem das strangförmige Profil hergestellt wird, ist vorzugsweise ausgewählt aus der Gruppe bestehend aus Naturkautschuk (NR), Chloropren-Kautschuk (CR), Butadien-Kautschuk (BR), Silikon-Kautschuk, Styrol-Butadien-Kautschuk (SBR), Ethylen-Propylen-Copolymere (EPM), Ethylen-Propylen-Dien-Terpolymere (EPDM), Ethylen-Vinylacetat-Copolymere (EVM), chloriertes Polyethylen (CM), chlorsulfoniertes Polyethylen (CSM), Acrylnitril-Butadien-Kautschuk (NBR), hydrierter Acrylnitril-Butadien-Kautschuk (HNBR), Fluorkautschuk (FPM), Polyurethan-Elastomere (PUR), Mischungen aus Acrylnitril-Butadien-Kautschuk und Polyvinylchlorid (NBR/PVC), sowie Mischungen aus diesen Materialien.

Besonders bevorzugt ist das Elastomermaterial ausgewählt aus Ethylen-Propylen-Dien-Terpolymer, Naturkautschuk, Chloropren-Kautschuk oder einer Mischung daraus.

Die aushärtbare Tinte mit reibungsverminderndem Zusatz, die auf das strangförmige Profil aufgebracht wird, enthält in einer ersten Ausführungsform zumindest ein Bindemittel zur Bildung einer Bindemittelphase durch Polymerisation und Trockenschmierstoffpartikel. Das Bindemittel ist in dieser Ausführungsform im Allgemeinen ein wärmeaushärtendes Bindemittel.

Als Bindemittel eignen sich zum Beispiel Aminoharze, insbesondere Hexamethoxymethylmelamin-Harz oder ein vollständig oder teilweise alkyliertes Imin-Aminoharz, bi- oder multifunktionelle Isocyanate, Alkoxysilane oder bifunktionelle Silane mit Alkoxysilyl-Gruppen und zumindest einer organischen funktionellen Gruppe. Nach dem Aufbringen auf das Elastomermaterial wird dieses einer Wärmequelle ausgesetzt, so dass die in der Tinte enthaltenen Monomere oder gegebenenfalls Oligomere zu einer Bindemittelphase aushärten. Die so erhaltene Bindemittelphase ist eine Polymermatrix, die auch in Beschichtungszusammensetzungen mit einem hohen Anteil an Trockenschmierstoffpartikeln eine ausreichende Kohäsionsfestigkeit bietet. Insbesondere bindet die Polymermatrix die Trockenschmierstoffpartikel gut ein, so dass auch eine gute Verschleißfestigkeit und eine sehr gute Haftung am Elastomermaterial erzielt wird.

Wenn das Bindemittel ein bifunktionelles Silan mit Alkoxysilyl-Gruppen und zumindest einer organischen funktionellen Gruppe ist, so enthält die funktionelle organische Gruppe des bifunktionellen Silans vorzugsweise eine Epoxy-Gruppe oder eine Amino-Gruppe oder ist eine Fluoroalkyl-Gruppe.

In einer alternativen Ausführungsform enthält die aushärtbare Tinte zumindest ein Bindemittel und einen Härter zur Bildung einer Bindemittelphase und Trockenschmierstoffpartikel. Im Unterschied zur vorstehend beschriebenen Ausführungsform liegt in dieser Ausführungsform das Bindemittel in zwei Komponenten vor. Die Aushärtung erfolgt jedoch auch hier im Allgemeinen durch Wärmeeinwirkung.

Geeignete Bindemittel sind zum Beispiel Polyacrylat-Harze mit Hydroxy-Gruppen als funktionellen Gruppen und der Härter ist zum Beispiel Melamin-Formaldehyd und/oder Isocyanat. Die hiermit erzeugte Polymermatrix ist ebenfalls ausreichend vernetzt, um die Trockenschmierstoffpartikel fest in der Polymermatrix zu halten. Auch bei einem hohen Anteil an Trockenschmierstoffpartikeln kann noch eine ausreichende Kohäsionsfestigkeit der ausgehärteten Tinte erhalten werden. Dies führt ebenfalls zu einer hohen Verschleißfestigkeit und einer sehr guten Haftung auf dem Elastomermaterial. Die in der Tinte eingesetzten Trockenschmierstoffpartikel sind vorzugsweise ausgewählt aus der Gruppe bestehend aus Graphitpartikeln, Molybdänsulfidpartikeln, Polyamidpartikeln, Polyethylenpartikeln, Polytetrafluorethylenpartikeln und Glas-Mikroperlen sowie Mischungen daraus. Besonders bevorzugt sind die Trockenschmierstoffpartikel Graphitpartikel.

Um die Tinte mit einem Tintenstrahl-Druckverfahren verarbeiten zu können, liegt die mittlere Partikelgröße der Trockenschmierstoffpartikel vorzugsweise bei weniger als 6 µm, insbesondere bei weniger als 2 µm.

Der Anteil der Trockenschmierstoffpartikel in der Tinte, die auf das strangförmige Profil aus dem Elastomermaterial aufgebracht wird, liegt vorzugsweise im Bereich von 5 bis 30 Gew.-%. Mehr bevorzugt liegt der Anteil an Trockenschmierstoffpartikeln im Bereich von 7 bis 15 Gew.-% und insbesondere im Bereich von 8 bis 12 Gew.-%. Dieser Anteil erlaubt eine hinreichende Stabilität der die Trockenschmierstoffpartikel enthaltenden Dispersion der auf das strangförmige Profil aufzubringenden Tinte.

Der Gesamtanteil an festen Bestandteilen in der Tinte liegt vorzugsweise im Bereich von 5 bis 40 Gew.-%, mehr bevorzugt im Bereich von 10 bis 30 Gew.-% und insbesondere im Bereich von 15 bis 25 Gew.-%. Mit diesem Anteil an Feststoffen in der Tinte werden noch gute Auftragseigenschaften beim Tintenstrahl-Druckverfahren erreicht.

Um stabile Druckeigenschaften zu erzielen, liegt weiterhin die Viskosität der Tinte vorzugsweise im Bereich von 2 bis 15 mPas und insbesondere im Bereich von 4 bis 11 mPas. Die Tinte mit diesen Eigenschaften kann zum Beispiel gut mit einem piezoelektrischen Tintenstrahl-Druckkopf aufgetragen werden. Jedoch ist die Erfindung nicht auf die Verwendung von piezoelektrischen Tintenstrahldruccköpfen beschränkt. Auch jeder beliebige andere, dem Fachmann bekannte Tintenstrahl-Druckkopf kann zum Aufdrucken der die Trockenschmierstoffpartikel enthaltenden Tinte auf das strangförmige Profil aus Elastomermaterial eingesetzt werden.

Zusätzlich zu Bindemittel und Trockenschmierstoffpartikeln kann die Tinte weiterhin auch Benetzungsmittel, Dispergiermittel, Verdickungsmittel und/oder Verstärkungsmittel enthalten. Diese können sowohl flüssig als auch als Feststoffe vorliegen. Wenn die Zusatzstoffe als Feststoffe vorliegen, so ist darauf zu achten, dass der Gesamtfeststoffanteil den vorstehend beschriebenen Anteil nicht übersteigt.

Als Verstärkungsmittel, das in der Tinte eingesetzt wird, kann zum Beispiel Kolloid-Kieselerde verwendet werden.

In einer weiteren Ausführungsform der Erfindung enthält die Bindemittelzusammensetzung der Tinte Harze, die mit feuchtigkeitsaktivierenden Isocyanat-Gruppen funktionalisiert sind. Die feuchtigkeitsaktivierte Vernetzung eines Harzes, entweder bei Raumtemperatur oder bei einer höheren Vernetzungstemperatur, hat den Vorteil, dass die Aktivierung der Vernetzung unmittelbar an der Oberfläche zwischen dem Elastomer des strangförmigen Profils und den Tröpfchen auftritt. Dies ist insbesondere dann der Fall, wenn die Oberfläche des strangförmigen Profils zum Beispiel durch einen Reinigungsprozess mit Wasser oder Dampf befeuchtet ist. Zudem wird eine Vernetzung der Tröpfchen der Beschichtung durch Luftfeuchtigkeit erreicht. Hieraus ergibt sich eine feste und gegen Verschleiß stabile Struktur auch bei nassen Betriebsbedingungen. Die Tröpfen der feuchtigkeitsaktivierbaren Tinte können zum Beispiel ein Urethanharz enthalten, das mit Isocyanat-Gruppen funktionalisiert ist. Die Vernetzungsreaktion der durch das Tintenstrahl-Druckverfahren abgeschiedenen Tröpfchen ist feuchtigkeitsaktiviert durch Umwandlung der Isocyanat-Gruppen in Amino-Gruppen, die an der Vernetzungsreaktionskette teilhaben. Die so erhaltene Beschichtung ist fest und zeigt eine sehr gute Haftung an der Oberfläche des Elastomermaterials.

Das strangförmige Profil aus dem Elastomermaterial ist insbesondere ein Wischgummi für ein Wischerblatt. Dieses kann zum Beispiel durch ein Extrusionsverfahren mit anschließender Vulkanisation hergestellt werden. Im Allgemeinen ist das strangförmige Profil ein Doppelprofil, bei dem zwei Wischblätter an ihrer Wischkante miteinander verbunden sind und nach der Vulkanisation voneinander getrennt werden.

Die Vulkanisation des strangförmigen Profils aus dem Elastomermaterial erfolgt vorzugsweise nach dem Aufbringen der Beschichtung. Insbesondere wenn die Beschichtung wärmeaushärtend ist, wird die Vulkanisation nach dem Beschichten durchgeführt, so dass die bei der Vulkanisation eingebrachte Wärme auch die Aushärtungsreaktion der Beschichtung aktiviert. Alternativ ist es jedoch auch möglich, zunächst das Elastomermaterial zu vulkaniseren, anschließend das Beschichtungsmaterial durch Tintenstrahl-Druck aufzubringen und danach von außen Wärme zuzuführen, um die Beschichtung auszuhärten. Die Wärme kann dann zum Beispiel durch IR-Strahlung erzeugt werden. Jedoch ist auch jede beliebige andere, dem Fachmann bekannte Art der Wärmeerzeugung möglich. Vorzugsweise durchläuft das strangförmige Profil zur Erwärmung einen kontinuierlichen Ofen.

Die aushärtbare Tinte kann sowohl einseitig als auch beidseitig auf das strangförmige Profil aus Elastomermaterial aufgebracht werden. Bevorzugt wird die aushärtbare Tinte beidseitig auf das strangförmige Profil aufgebracht. Weiterhin ist es möglich, dass die aushärtbare Tinte als dünne Schicht oder in Form eines Musters auf das strangförmige Profil aufgebracht wird. Wenn die Tinte als Muster auf das strangförmige Profil aufgebracht wird, so kann dieses aus sich wiederholenden Einheiten zusammengesetzt sein. Im Allgemeinen wechseln sich hierbei beschichtete und nicht beschichtete Bereiche ab.

Wenn das strangförmige Profil aus Elastomermaterial ein Doppelprofil für Wischgummis für Wischblätter ist, so ist es bevorzugt, das Doppelprofil erst nach dem Aufbringen der aushärtbaren Tinten in einzelne Wischblätter zu trennen. Alternativ ist es jedoch auch möglich, zunächst das Doppelprofil zu trennen und erst danach die aushärtbare Tinte aufzubringen. Die aushärtbare Tinte wird dabei insbesondere im Bereich der Wischkante des Wischgummis aufgebracht. Durch das Aufbringen im Bereich der Wischkante wird eine verschleißvermindernde Beschichtung erzielt und die Reibung auf einer Oberfläche herabgesetzt.

### Kurze Beschreibung der Zeichnungen

Ausführungsbeispiele der Erfindung sind in den Zeichnungen dargestellt und werden in der nachfolgenden Beschreibung näher erläutert.

Es zeigen:
- Figur 1: eine schematische Darstellung des erfindungsgemäßen Verfahrens,
- Figuren 2 bis 6: unterschiedliche Beschichtungsmuster.

### Ausführungsformen der Erfindung

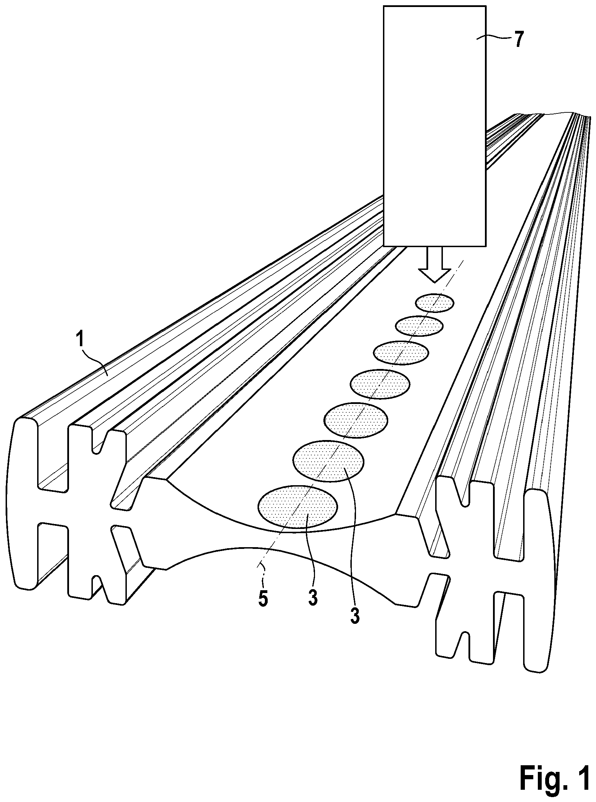

In Figur 1 ist schematisch das erfindungsgemäße Verfahren anhand eines Doppelprofils für ein Wischgummi dargestellt.

Ein zu beschichtendes strangförmiges Profil 1 ist im Allgemeinen ein Profil, das durch ein Extrusionsverfahren, ein Spritzgussverfahren oder ein Formpressverfahren hergestellt wird. Üblicherweise wird das strangförmige Profil 1 aus einem Elastomermaterial gefertigt. Als Elastomermaterial für das strangförmige Profil 1 eignen sich, wie vorstehend beschrieben, zum Beispiel NR, CR, EPDM, EPM oder Mischungen daraus. Wenn das strangförmige Profil 1 für Wischgummis von Scheibenwischern eingesetzt werden soll, so ist gewünscht, dass der Reibwert zwischen dem als Wischgummi eingesetzten strangförmigen Profil 1 und einer Scheibe, auf der der Scheibenwischer eingesetzt wird, möglichst niedrig ist. Der niedrige Reibwert führt zum Beispiel zu einem reduzierten Laufgeräusch. Erzielt wird der niedrige Reibwert erfindungsgemäß durch das Aufbringen einer Beschichtung 3 auf das strangförmige Profil 1. Die Beschichtung 3 enthält ein Bindemittel, das beim Aushärten einen Polymerfilm an der Oberfläche der Beschichtung 3 ausbildet. Um den Reibwert zu reduzieren, enthält die Beschichtung 3 Trockenschmierstoffpartikel.

Das in Figur 1 dargestellte strangförmige Profil 1 zeigt zwei Wischgummis, die zunächst als ein strangförmiges Profil 1 hergestellt werden. Um einzelne Wischgummis für Scheibenwischer zu erzeugen, wird das strangförmige Profil 1 entlang einer Mittellinie 5 getrennt. Es werden zwei einzelne Wischgummis aus dem strangförmigen Profil 1 hergestellt. Alternativ zu dem hier dargestellten Verfahren, bei dem zunächst das strangförmige Profil 1 mit einer Beschichtung versehen und anschließend getrennt wird, ist es auch möglich, zunächst das strangförmige Profil 1 in einzelne Wischgummis zu trennen und diese anschließend zu beschichten.

Die Beschichtung 3 wird erfindungsgemäß durch ein Tintenstrahl-Druckverfahren aufgebracht. Hierzu wird ein geeigneter Drucker mit einem Druckkopf 7 eingesetzt. Hierzu eignet sich jeder beliebige, dem Fachmann bekannte Druckkopf, mit dem ein Tintenstrahl-Druck durchgeführt werden kann. Die Beschichtung 3 kann mit Hilfe des Tintenstrahl-Druckverfahrens in einem beliebigen Muster aufgetragen werden. Zudem ist es möglich, die Schwankungen in der Dicke der Beschichtung 3 gering zu halten. So sind Abweichungen von weniger als 1 µm in der Beschichtungsstärke möglich. Auch lässt sich durch das Tintenstrahl-Druckverfahren der bedruckte Bereich genau präzisieren.

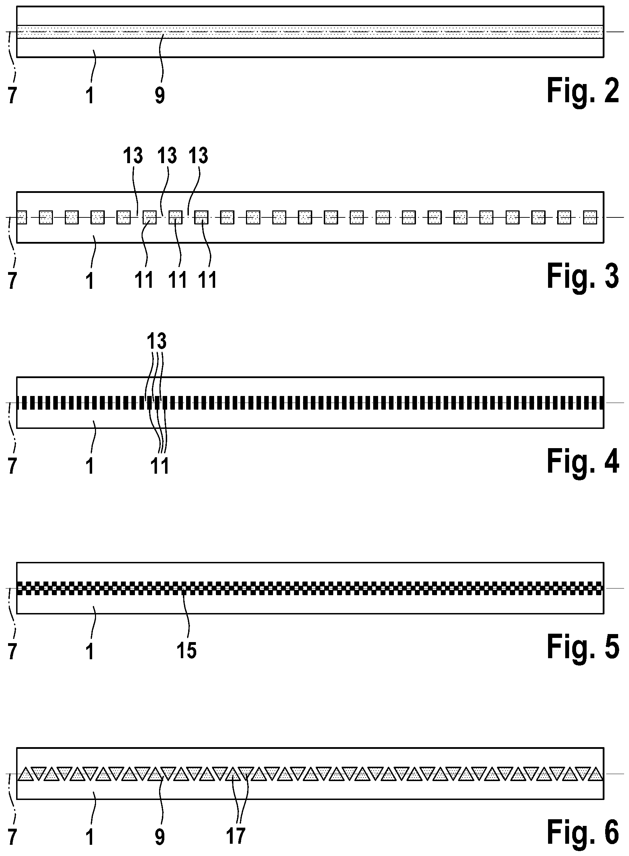

In den Figuren 2 bis 6 sind unterschiedliche Muster, die auf das strangförmige Profil 1 aufgetragen werden können, dargestellt. So kann die Beschichtung 3 zum Beispiel in Form einer kontinuierlichen Linie 9 auf das strangförmige Profil aufgebracht werden. Alternativ ist es jedoch zum Beispiel auch möglich, jeweils beschichtete Bereiche 11 und unbeschichtete Bereiche 13 alternierend vorzusehen. Diese können, wie in den Figuren 3 und 4 ersichtlich ist, jeweils unterschiedlich groß sein. Bevorzugt ist es jedoch, dass die Muster regelmäßig sind, d. h. zum Beispiel, dass jeweils die beschichteten Bereiche 11 und die unbeschichteten Bereiche 13 gleich groß sind. Hierbei ist es nicht notwendig, dass die beschichteten Bereiche 11 die gleichen Abmessungen aufweisen wie die unbeschichteten Bereiche 13.

Neben dem Aufbringen der Beschichtung 3 mit alternierenden beschichteten Bereichen 11 und unbeschichteten Bereichen 13, wie diese in den Figuren 3 und 4 dargestellt sind, ist es alternativ auch möglich, beispielsweise ein Raster 15, wie es in Figur 5 dargestellt ist, aufzudrucken. Auch ist jedes beliebige andere Muster möglich. So zeigt Figur 6 zum Beispiel ein aus Dreiecken zusammengesetztes Muster 17. Hierbei wechseln sich jeweils um 180° zueinander gedrehte Dreiecke ab.

### Beispiele

### Beispiel 1

Es wird eine wässrige Tinte, die sich zum Drucken mit einem Tintenstrahl-Druckverfahren eignet, hergestellt. Die wässrige Tinte enthält 10 Gew.-% Hexamethoxymethylmelamin, beispielsweise Cymel 303 MR® der Firma Cytec, 9 Gew.-% Graphit, 3 Gew.-% Polyacrylat-Lösung als Verdickungsmittel, 14 Gew.-% Butylglykol und 64 Gew.-% voll entsalztes Wasser. Um die erforderliche Graphit-Dispersion zu erhalten, wird die Mischung in einer Perlmühle gemahlen.

Die so hergestellte Tinte wird auf ein Elastomerprofil aufgebracht. Das Elastomerprofil ist ein Doppelprofil für Wischgummis, das aus einem Chlorkautschuk durch Spritzguss hergestellt wird. Nach einer Vortrocknung, um Lösungsmittel aus der Tinte zu verdampfen, werden die Profile bei 150 °C für 10 min ausgehärtet, um eine 1 µm dicke Schicht zu erhalten, die 51,5 Gew.-% polymerisiertes Hexamethoxymethylmelamin, 47,3 Gew.-% Graphit und 1,2 Gew.-% Verdickungsmittel enthält.

Nach dem Aushärten der Beschichtung werden die Doppelprofile geschnitten und in zwei Einzelprofile getrennt. Die Untersuchung der Schnittkante zeigt keine Beschädigungen und kein Abplatzen der Beschichtung.

Die Graphitpartikel sind gut mit dem Bindemittel verbunden, so dass eine feste Polymermatrix mit sehr guter Verschleißfestigkeit auf hydrophoben und hydrophilen Windschutzscheiben erzielt wird. Auch werden gute Rutscheigenschaften erhalten.

### Beispiel 2

Es wird eine lösungsmittelbasierte Zusammensetzung, die sich zum Drucken mit einem Tintenstrahl-Druckverfahren eignet hergestellt, die 30 Gew.-% einer 50 %igen Lösung Polyisocyanat in Butylacetat enthält, 27 Gew.-% Graphit und 43 Gew.-% Butylglykol. Das Polyisocyanat ist eine Mischung aus Toluylendiisocyanat (TDI) und Diphenylmethandiisocyanat (MDI) und liegt als Feststoff vor. Die 50 %ige Lösung aus Polyisocyanat in Butylacetat wird zum Beispiel als Desmodur E XP 2605® von Bayer Material Science vertrieben.

Die Zusammensetzung wird auf ein Elastomerprofil aufgebracht. Das Elastomerprofil ist ebenfalls ein Doppelprofil für ein Wischgummi, das durch Spritzguss aus einem Chlorkautschuk hergestellt wird. Nach dem Aufdrucken der Zusammensetzung werden zunächst durch eine Vortrocknung Lösungsmittel verdampft und anschließend erfolgt eine Aushärtung bei Raumtemperatur für 8 h, um einen 1 µm dicken Film zu erhalten, der 35,7 Gew.-% Bindemittel und 64,3 Gew.-% Graphit enthält.

Nach dem Aushärten wird das Doppelprofil in zwei Einzelprofile geschnitten. Die Schnittkante zeigt keine Beschädigung auf und es platzt auch keine Beschichtung von der Schnittkante ab.

Die Beschichtung zeigt gute Reibeigenschaften und die Graphitpartikel sind ausreichend stark mit der Polymermatrix verbunden, so dass eine gute Verschleißfestigkeit auf die Druckproben und die hydrophilen Windschutzscheiben erzielt wird.

### Beispiel 3

Es wird eine wie in Beispiel 1 beschriebene, für Tintenstahl-Druckverfahren geeignete Tinte eingesetzt. Nach einer Vortrocknung, um das Lösungsmittelgemisch zu verdampfen und die topografische Struktur der Beschichtung zu stabilisieren, wird eine flüssige Zusammensetzung, die OH-funktionalisiertes Nano-Silica enthält, auf die topografische Basisschicht aufgesprüht. Die topografische Basisschicht ist immer noch ausreichend reaktiv, um eine verbesserte Haftung des OH-funktionalisierten Nano-Silica auf der topografischen Basisschicht zu erhalten. Durch die Nano-Silika-Partikel wird die Fähigkeit der topografischen Basisschicht verbessert.

### Beispiel 4

Es wird eine wie in Beispiel 1 beschriebene, für Tintenstahl-Druckverfahren geeignete Tinte eingesetzt.

Nach der Vortrocknung, um das Lösungsmittelgemisch zu verdampfen und die topografische Struktur der Schicht zu stabilisieren, wird eine flüssige Graphitdispersion mit einem Bindemittel auf die topografische Basisschicht aufgesprüht. Die topografische Basisschicht ist noch ausreichend reaktiv, um eine verbesserte Adhäsion des OH-funktionalisierten Polymerbindemittels auf der topografischen Schicht zu erhalten. Die Graphitpartikel führen zu einer zusätzlichen Schmierwirkung der topografischen Schicht. Wenn die Graphitschicht durch Verschleiß von der topografischen Basisschicht abgetragen worden ist, wird eine weitere niedrige Reibung durch die zähe topografische Basisschicht sichergestellt.

### Beispiel 5

Eine wässrige Zusammensetzung, die sich zum Drucken mit Tintenstrahl-Druckverfahren eignet und die 0,5 Massenanteile Beta(3,4-Epoxycyclohexyl)-ethyltriethoxysilan (Code OSil 1770® von Momentive), 21,6 Massenanteile Graphit, 10 Massenanteile Acryl-Methacryl-Styrol-Terpolymer, 0,2 Massenanteile Polyacrylatlösung als Verdickungsmittel, 0,2 Massenanteile Benetzungsmittel, 5,5 Massenanteile Butylglykol und 150 Massenanteile vollentsalztes Wasser enthält, wird hergestellt. Um die erforderliche Graphit-Dispersion zu erhalten, wird die Mischung in einer Perlmühle gemahlen.

Die Zusammensetzung wird auf ein Elastomerprofil aufgebracht. Das Elastomerprofil ist ein Doppelprofil für Wischgummis, das durch ein Spritzgussverfahren aus einem Chlorkautschuk hergestellt wird.

Nach einer Vortrocknung, um die Lösungsmittel zu verdampfen, wird die Beschichtung auf den Doppelprofilen bei 100 °C für 15 min oder bei Raumtemperatur für 7 Tage ausgehärtet, um einen festen, 2 µm dicker Film zu erhalten, der 32,3 Gew.-% eines festen Bindemittelanteils, das durch Reaktion des Acryl-Methacryl-Styrol-Terpolymers mit dem Beta(3,4-Ethoxycyclohexyl)ethyltriethoxysilan gebildet wird, 66,5 Gew.-% Graphit, 0,6 Gew.-% Verdickungsmittel und 0,6 Gew.-% Benetzungsmittel enthält. Nach dem Aushärten der Beschichtung werden die Doppelprofile der Länge nach geschnitten und in zwei Einzelprofile getrennt. Die Untersuchung der Schnittkante zeigt keine Beschädigung und kein Abplatzen der Beschichtung.

Es werden gute Gleiteigenschaften der Beschichtung erhalten. Auch sind die Graphitpartikel fest mit dem Bindemittel verbunden, so dass eine ausgezeichnete Verschleißfestigkeit auf hydrophoben und hydrophilen Windschutzscheiben erzielt wird.

### Beispiel 6

Es werden Zusammensetzungen für eine Beschichtung hergestellt, die sich zur Herstellung einer Basisschicht mit einem Tintenstahl-Druckverfahren eignen, und die den in den Beispielen 1 und 5 beschriebenen Zusammensetzungen entsprechen, jedoch wird das Graphit durch Kaolin mit einer sehr geringen Korngröße ersetzt. Als Kaolin wird zum Beispiel wässriges Aluminiumsilikat HG90® von KaMin mit einem mittleren Partikeldurchmesser von 0,4 µm eingesetzt.

### Beispiel 7

Es werden Zusammensetzungen für eine Beschichtung hergestellt, die sich zur Herstellung einer Basisschicht mit einem Tintenstahl-Druckverfahren eignen, und die den in den Beispielen 1 und 5 beschriebenen Zusammensetzungen entsprechen, jedoch wird das Graphit durch Kaolin und HDPE, die jeweils eine sehr geringe Korngröße aufweisen, ersetzt. Als Kaolin wird zum Beispiel wässriges Aluminiumsilikat HG90® von KaMin mit einem mittleren Partikeldurchmesser von 0,4 µm eingesetzt und als HDPE-Dispersion ME 93335 von Michelman mit einem mittleren Partikeldurchmesser von 0,05 µm.

## Patentansprüche

1. Verfahren zur Herstellung eines strangförmigen Profils (1) aus einem Elastomermaterial, das zumindest teilweise mit einer reibungsvermindernden Beschichtung (3) versehen ist, **dadurch gekennzeichnet, dass** für die reibungsvermindernde Beschichtung (3) eine aushärtbare Tinte mit reibungsverminderndem Zusatz durch ein Tintenstrahl-Druckverfahren auf das Elastomermaterial aufgetragen wird, wobei die aushärtbare Tinte zumindest ein Bindemittel zur Bildung einer Bindemittelphase durch Polymerisation und Trockenschmierstoffpartikel enthält und wobei der Anteil der Trockenschmierstoffpartikel in der Tinte im Bereich zwischen 5 und 30 Gew.-% liegt.

2. Verfahren gemäß Anspruch 1, **dadurch gekennzeichnet, dass** das Bindemittel ein Aminoharz, insbesondere ein Hexamethoxymethylmelamin-Harz oder ein vollständig oder teilweise alkyliertes Imin-Aminoharz, ein di- oder multifunktionelles Isocyanat, ein Alkoxysilan oder ein bifunktionelles Silan mit Alkoxysilyl-Gruppen und zumindest einer organischen funktionellen Gruppe ist.

3. Verfahren gemäß Anspruch 2, **dadurch gekennzeichnet, dass** die funktionelle organische Gruppe des bifunktionellen Silans eine Epoxy-Gruppe oder eine Amino-Gruppe enthält oder eine Fluoroalkyl-Gruppe ist.

4. Verfahren gemäß Anspruch 1, **dadurch gekennzeichnet, dass** die aushärtbare Tinte zumindest ein Bindemittel und einen Härter zur Bildung einer Bindemittelphase und Trockenschmierstoffpartikel enthält.

5. Verfahren gemäß Anspruch 4, **dadurch gekennzeichnet, dass** das Bindemittel ein Polyacrylat-Harz mit Hydroxygruppen als funktionellen Gruppen und der Härter Melamin-Fomaldehyd und/oder Isocyanat ist.

6. Verfahren gemäß einem der Ansprüche 1 bis 5, **dadurch gekennzeichnet, dass** die Trockenschmierstoffpartikel ausgewählt sind aus der Gruppe bestehend aus Graphitpartikeln, Molybdänsulfidpartikeln, Polyamidpartikeln, Polyethylenpartikeln, Polytetrafluorethylenpartikeln und Glas-Mikroperlen sowie Mischungen daraus.

7. Verfahren gemäß einem der Ansprüche 1 bis 6, **dadurch gekennzeichnet, dass** die Trockenschmierstoffpartikel der Tinte als Dispersion zugegeben werden.

8. Verfahren gemäß einem der Ansprüche 1 bis 7, **dadurch gekennzeichnet, dass** die Tinte weiterhin Benetzungsmittel, Dispergiermittel, Verdickungsmittel und/oder Verstärkungsmittel enthält.

9. Verfahren gemäß Anspruch 8, **dadurch gekennzeichnet, dass** das Verstärkungsmittel eine Kolloid-Kieselerde ist.

10. Verfahren gemäß einem der Ansprüche 1 bis 9, **dadurch gekennzeichnet, dass** das strangförmige Profil (1) aus Elastomermaterial ein Wischgummi für ein Wischerblatt ist.

11. Verfahren gemäß einem der Ansprüche 1 bis 10, **dadurch gekennzeichnet, dass** die aushärtbare Tinte beidseitig auf das strangförmige Profil (1) aus Elastomermaterial aufgebracht wird.

12. Verfahren gemäß einem der Ansprüche 1 bis 11, **dadurch gekennzeichnet, dass** die aushärtbare Tinte als dünne Schicht oder in Form eines Musters auf das strangförmige Profil (1) aus Elastomermaterial aufgebracht wird.

13. Verfahren gemäß einem der Ansprüche 1 bis 12, **dadurch gekennzeichnet, dass** das strangförmige Profil (1) aus Elastomermaterial ein Doppelprofil für Wischgummis für Wischblätter ist, das nach dem Aufbringen der aushärtbaren Tinte in einzelne Wischblätter getrennt wird.

14. Verfahren gemäß einem der Ansprüche 10 bis 13, **dadurch gekennzeichnet, dass** die aushärtbare Tinte im Bereich der Wischkante des Wischgummis aufgebracht wird.

## Claims

1. Process for producing a strand-shaped profile (1) made of an elastomer material which is provided at least partly with a friction-reducing coating (3), **characterized in that** for the friction-reducing coating (3), a curable ink with friction-reducing additive is applied by an ink-jet printing process to the elastomer material, the curable ink comprising at least one binder for forming a binder phase by polymerization, and dry lubricant particles, the fraction of the dry lubricant particles in the ink being in the range between 5 and 30 wt%.

2. Process according to Claim 1, **characterized in that** the binder is an amino resin, more particularly a hexamethoxymethylmelamine resin or a fully or partly alkylated imine-amino resin, a di- or polyfunctional isocyanate, an alkoxysilane or a bifunctional silane having alkoxysilyl groups and at least one organic functional group.

3. Process according to Claim 2, **characterized in that** the functional organic group of the bifunctional silane comprises an epoxy group or an amino group or is a fluoroalkyl group.

4. Process according to Claim 1, **characterized in that** the curable ink comprises at least one binder and a curing agent for forming a binder phase, and dry lubricant particles.

5. Process according to Claim 4, **characterized in that** the binder is a polyacrylate resin having hydroxyl groups as functional groups and the curing agent is melamine-formaldehyde and/or isocyanate.

6. Process according to any of Claims 1 to 5, **characterized in that** the dry lubricant particles are selected from the group consisting of graphite particles, molybdenum sulfide particles, polyamide particles, polyethylene particles, polytetrafluoroethylene particles and glass microbeads and also mixtures thereof.

7. Process according to any of Claims 1 to 6, **characterized in that** the dry lubricant particles are added to the ink as a dispersion.

8. Process according to any of Claims 1 to 7, **characterized in that** the ink further comprises wetting agents, dispersants, thickeners and/or reinforcing agents.

9. Process according to Claim 8, **characterized in that** the reinforcing agent is a colloidal silica.

10. Process according to any of Claims 1 to 9, **characterized in that** the strand-shaped profile (1) made of elastomer material is a wiper rubber for a wiper blade.

11. Process according to any of Claims 1 to 10, **characterized in that** the curable ink is applied on both sides to the strand-shaped profile (1) made of elastomer material.

12. Process according to any of Claims 1 to 11, **characterized in that** the curable ink is applied as a thin layer or in the form of a pattern to the strand-shaped profile (1) made of elastomer material.

13. Process according to any of Claims 1 to 12, **characterized in that** the strand-shaped profile (1) made of elastomer material is a dual profile for wiper rubbers for wiper blades, which is separated into individual wiper blades after the application of the curable ink.

14. Process according to any of Claims 10 to 13, **characterized in that** the curable ink is applied in the region of the wiping edge of the wiper rubber.

## Revendications

1. Procédé de fabrication d'un profilé en forme de cordon (1) en un matériau élastomère, qui est au moins partiellement muni d'un revêtement réduisant les frottements (3), **caractérisé en ce que**, pour le revêtement réduisant les frottements (3), une encre durcissable contenant un additif réduisant les frottements est appliquée par un procédé d'impression à jet d'encre sur le matériau élastomère, l'encre durcissable contenant au moins un liant pour la formation d'une phase de liant par polymérisation et des particules de lubrifiant sec, et la proportion des particules de lubrifiant sec dans l'encre se situant dans la plage comprise entre 5 et 30 % en poids.

2. Procédé selon la revendication 1, **caractérisé en ce que** le liant est une résine amino, notamment une résine hexaméthoxyméthylmélamine ou une résine imine-amino entièrement ou partiellement alkylée, un isocyanate di- ou multifonctionnel, un alcoxysilane ou un silane bifonctionnel contenant des groupes alcoxysilyle et au moins un groupe fonctionnel organique.

3. Procédé selon la revendication 2, **caractérisé en ce que** le groupe organique fonctionnel du silane bifonctionnel contient un groupe époxy ou un groupe amino ou est un groupe fluoroalkyle.

4. Procédé selon la revendication 1, **caractérisé en ce que** l'encre durcissable contient au moins un liant et un agent de durcissement pour la formation d'une phase de liant et des particules de lubrifiant sec.

5. Procédé selon la revendication 4, **caractérisé en ce que** le liant est une résine de polyacrylate contenant des groupes hydroxy en tant que groupes fonctionnels et l'agent de durcissement est la mélamine-formaldéhyde et/ou un isocyanate.

6. Procédé selon l'une quelconque des revendications 1 à 5, **caractérisé en ce que** les particules de lubrifiant sec sont choisies dans le groupe constitué par les particules de graphite, les particules de sulfure de molybdène, les particules de polyamide, les particules de polyéthylène, les particules de polytétrafluoroéthylène et les microperles de verre, ainsi que leurs mélanges.

7. Procédé selon l'une quelconque des revendications 1 à 6, **caractérisé en ce que** les particules de lubrifiant sec sont ajoutées à l'encre sous la forme d'une dispersion.

8. Procédé selon l'une quelconque des revendications 1 à 7, **caractérisé en ce que** l'encre contient en outre des agents mouillants, des agents dispersants, des agents épaississants et/ou des agents renforçants.

9. Procédé selon la revendication 8, **caractérisé en ce que** l'agent renforçant est une silice colloïdale.

10. Procédé selon l'une quelconque des revendications 1 à 9, **caractérisé en ce que** le profilé en forme de cordon (1) en un matériau élastomère est un caoutchouc d'essuyage pour un balai d'essuie-glace.

11. Procédé selon l'une quelconque des revendications 1 à 10, **caractérisé en ce que** l'encre durcissable est appliquée des deux côtés sur le profilé en forme de cordon (1) en un matériau élastomère.

12. Procédé selon l'une quelconque des revendications 1 à 11, **caractérisé en ce que** l'encre durcissable est appliquée sous la forme d'une couche mince ou sous la forme d'un motif sur le profilé en forme de cordon (1) en un matériau élastomère.

13. Procédé selon l'une quelconque des revendications 1 à 12, **caractérisé en ce que** le profilé en forme de cordon (1) en un matériau élastomère est un profilé double pour caoutchoucs d'essuyage pour balais d'essuie-glaces, qui est séparé en balais d'essuie-glaces individuels après l'application de l'encre durcissable.

14. Procédé selon l'une quelconque des revendications 10 à 13, **caractérisé en ce que** l'encre durcissable est appliquée dans la zone du bord d'essuyage du caoutchouc d'essuyage.
